# EUROPEAN PATENT APPLICATION

(11) **EP 3 208 564 A1**
(43) Date of publication of application: **23.08.2017**
(21) Application number: 16191911.3
(22) Date of filing: 30.09.2016
(51) Int. Cl.: F26B 3/347, F26B 13/10, H05B 6/78

(54) **INTELLIGENT MANUFACTURING SYSTEM FOR MAKING CLEANING SHEET**

(30) Priority: 17.02.2016 CN 201610088991; 25.03.2016 CN 201610176559
(71) Applicant: Mingyan Biotechnologies Co., Limited, Shanghai 201501 (CN)
(72) Inventor: GUO, Guangbin, Shanghai, Shanghai 201501 (CN)
(74) Representative: Cabinet Becker et Associés

(57) **Abstract**

An intelligent manufacturing system for making cleaning sheets includes a multi-stage drying apparatus (5) and a continuous track (2) with non-stick coating (22). The drying apparatus (5) has at least two stages and a lifting roller (6) arranged between the two stages of the drying apparatus (5). The continuous track (2) is at its exterior surface coated with the non-stick coating (22) or covered by a medium (23) having the non-stick coating (22), so that the manufactured cleaning sheet can have active cleaning ingredients therein protected and can be easily removed from the continuous track (2) after being dried. The lifting roller (6) between the two stages of the drying apparatus prevents the adhesion between adjacent layers of the rolled cleaning sheet. The intelligent manufacturing system also has an enzyme-adding apparatus (9) for spraying active enzyme, which improves cleaning power, onto the dried cleaning sheet so as to retain the activity of the enzyme.

## Description

### FIELD OF THE INVENTION

The present invention relates to an intelligent manufacturing system for making cleaning sheet according to the preamble of Claim 1. Accordingly, the present invention relates to the manufacture of cleaning sheets (such as sheet products for laundry washing, hand washing, cookware and tableware cleaning, showering, bathing, disinfecting, and pesticide removal from fruits and vegetables). More particularly, the present invention relates to an intelligent manufacturing system for making cleaning sheets.

### BACKGROUND OF THE INVENTION

Cleaning sheet products, such as laundry detergent sheets, are gaining popularity among consumers because they are compact, portable, easy to store, and easy to use with precise amount control.

However, there is only one kind of cleaning sheet product, i.e., laundry detergent sheets, currently available in the domestic market. Furthermore, the existing laundry detergent sheet products often fall short in terms of their cleaning power. Such issue is not only related to the composition or formula of the detergent sheets, but also to the manufacturing process.

To address such issue, the present inventor has invented an intelligent manufacturing system for making cleaning sheets. The manufacturing system has improved productivity, and the manufactured sheets have greater cleaning power.

### SUMMARY OF THE INVENTION

The present invention provides an intelligent manufacturing system for making cleaning sheets. The system is designed to significantly improve the cleaning power of the cleaning sheets over the prior art. The solution for solving the technical problem of the prior art includes the following.

The intelligent manufacturing system for making cleaning sheets is characterized in that it comprises a drying apparatus and a continuous track provided with a non-stick coating.

Therein, the drying apparatus can include at least two stages and a lifting roller is arranged between the two stages of the drying apparatus.

In an embodiment, the drying apparatus includes an intelligent microwave heating system equipped with a vapor-extraction mechanism, or includes an oven, or includes a fan heater, or includes a fin-type heater, or includes a tube-type heater.

Preferably, the intelligent microwave heating system of the present invention includes a plurality of modularized microwave heating devices that are configured to be combined freely to form the two stages of the drying apparatus. Each said stage formed by the microwave heating devices has two ends thereof provided with microwave hoods. The lifting roller is disposed between two adjacent said microwave hoods.

Each said microwave heating device can include a material sensor. The material sensor is in communicatory connection with an intelligent controller that controls the overall operation of the system. The intelligent controller can be installed on a track frame that supports the continuous track, or can be separated from the track frame, or can be installed on the drying apparatus. Advantageously, the intelligent controller is in the form of a handheld intelligent terminal, such as a handset, or is in the form of a personal computer (PC).

In an embodiment, the continuous track passes through the drying apparatus, or travels below the drying apparatus, or travels above the drying apparatus, or travels along one side of the drying apparatus. Preferably, the continuous track passes through the two-stage, modularized microwave heating device.

The non-stick coating is preferably made of Teflon so as to effectively prevent the material of the cleaning sheet from sticking on the continuous track. For instance, the non-stick coating and the continuous track are integrated as a unity, or the non-stick coating is applied to the exterior surface of the continuous track, or the non-stick coating is applied to a medium that is fixed to the exterior surface of the continuous track. Preferably, the medium is heat-resistant non-woven cloth.

In an embodiment, the continuous track has one end thereof provided with a material-feeding apparatus for feeding a material for making the cleaning sheet onto the continuous track. The material-feeding apparatus can be freely separated from the track frame or fixedly installed on the track frame.

In an embodiment, a thickness adjustor is provided above the continuous track for adjusting the thickness of the raw material for making the cleaning sheet on the continuous track. The thickness adjustor can be fixedly installed on the track frame, or suspended over the continuous track, or in the form of a handheld device.

A rolling-up apparatus can also be provided at one side of the continuous track or above the continuous track for rolling the cleaning sheet that has been dried. The rolling-up apparatus can be freely separated from the track frame, or fixedly installed on the track frame, so as to roll the dried cleaning sheet into rolls for easy storage and transportation.

In an embodiment, an enzyme-adding apparatus is further provided at one side of the continuous track or above the continuous track for adding active ingredients to the cleaning sheet blank that has been dried. The enzyme-adding apparatus can be installed on the track frame, or suspended over the continuous track, or arranged at one side of the track frame and freely separated from it.

In an embodiment, an embossing apparatus is further provided at one side of the continuous track or above the continuous track for embossing the cleaning sheet blank with patterns. The embossing apparatus can be installed on the track frame, or suspended over the continuous track, or arranged at one side of the track frame and freely separated from it.

In an embodiment, a cutting apparatus is further provided at one side of the continuous track or above the continuous track for cutting the cleaning sheet that has been dried into smaller pieces with predetermined shapes. The cutting apparatus can be installed on the track frame, or suspended over the continuous track, or freely separated from the track frame, so as to cut the large cleaning sheet or roll into small pieces with various desired shapes for convenient packaging.

In an embodiment, a collecting apparatus is further provided at one end or one side of the continuous track for collecting the pieces of cleaning sheets that have been cut by the cutting apparatus. The collecting apparatus can be freely separated from the track frame, or fixedly installed at one end of the track frame.

Particular embodiments of the present invention provide the following beneficial effects. The continuous track is at its exterior surface coated with non-stick coating or covered by a medium having non-stick coating, so that the manufactured cleaning sheet can have active cleaning ingredients therein protected, and can be easily taken off from the continuous track after being dried.

In addition, in particular embodiments, the lifting roller between the two stages of the drying apparatus prevents adhesion between successive layers of the rolled cleaning sheets. Also, the enzyme-adding apparatus that sprays active enzyme onto the dried cleaning sheet effectively retains the activity of the enzyme.

### BRIEF DESCRIPTION OF THE DRAWINGS

To more clearly describe the illustrative embodiments of the present invention, reference is made to the accompanying drawings, which obviously only serve to illustrate certain embodiments of the invention and do not limit the invention.
FIGS. 1A and 1B show a side view and a top view of a production line according to a first embodiment of the present invention;
FIG. 2 schematically illustrates a continuous track and related parts thereof according to the first and second embodiments of the present invention;
FIG. 3A and 3B schematically depict a material-feeding apparatus of the first embodiment of the present invention and a thickness adjustor of the first and second embodiments in a general view (FIG. 3A) and an enlarged view (FIG. 3B);
FIG. 4 schematically depicts an intelligent microwave heating system and related parts thereof according to the first and second embodiments of the present invention;
FIG. 5 shows an intelligent oven according to the first and second embodiments of the present invention;
FIG. 6 shows a fan heater according to the first and second embodiments of the present invention;
FIG. 7 shows a fin-type heater according to the first and second embodiments of the present invention;
FIG. 8 shows a tube-type heater according to the first and second embodiments of the present invention;
FIG. 9 is a partial, enlarged view of a lifting roller according to the first and second embodiments of the present invention;
FIG. 10 is a partial, enlarged view of a rolling-up apparatus according to the first embodiment of the present invention;
FIG. 11 is a side view of a production line according to the second embodiment of the present invention;
FIG. 12 shows a material-feeding apparatus and related parts thereof according to the second embodiment of the present invention;
FIG. 13 shows an enzyme-adding apparatus and related parts thereof according to the second embodiment of the present invention;
FIG. 14 shows an embossing apparatus and related parts thereof according to the second embodiment of the present invention;
FIG. 15 shows a cutting apparatus and related parts thereof according to the second embodiment of the present invention; and
FIG. 16 shows a collecting apparatus and related parts thereof according to the second embodiment of the present invention.

### DETAILED DESCRIPTION OF THE INVENTION

The following specific embodiments are to further illustrate the technical design, features, objects and effects of the present invention.

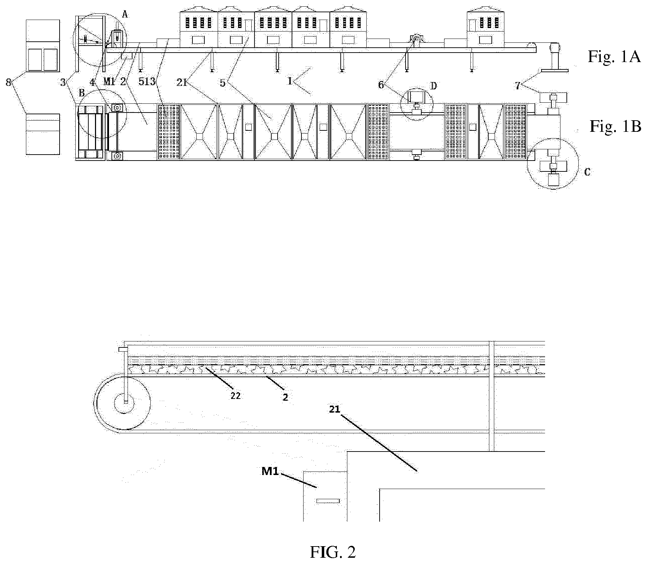

A first embodiment of the present invention is illustrated below with reference to FIGS. 1-10.

The intelligent manufacturing system includes a cleaning sheet production line 1 (referring to FIG. 1). The cleaning sheet production line 1 includes a continuous track 2, a track frame 21 that supports the continuous track 2, a material-feeding apparatus 3 that adds a source material for the cleaning sheet (which can be a liquid, such as a high concentration liquid detergent) onto the continuous track 2, a thickness adjustor 4 that adjusts the thickness of the material of the cleaning sheet on the continuous track 2, a two-stage drying apparatus 5 that vaporizes moisture from the material of the cleaning sheet on the continuous track 2, a lifting roller 6 that is arranged between the two stages of the drying apparatus 5, a rolling-up apparatus 7 that rolls the dried cleaning sheet into rolls, and an intelligent controller 8 that controls the overall operation.

Therein, the continuous track 2 is provided with non-stick coating 22 (as shown in FIG. 2). The non-stick coating 22 is preferably made of Teflon for effectively preventing the material for making the cleaning sheet from sticking on the continuous track 2. The non-stick coating 22 can be integrated into the continuous track 2. Alternatively, the non-stick coating 22 is applied to the exterior surface of the continuous track 2. Alternatively, the non-stick coating 22 is applied to a medium 23 that is fixed to the exterior surface of the continuous track 2. The medium 23 is preferably a heat-resistant non-woven cloth. The continuous track 2 is driven by a motor M1 that is installed on the track frame 21. The start, rotation rate and stop of the motor M1 are all intelligently controlled by the intelligent controller 8.

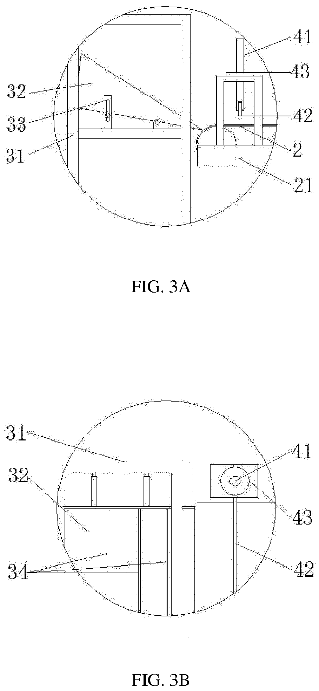

The material-feeding apparatus 3 is freely separated from the track frame 21, or is fixedly installed on the track frame 21. The material-feeding apparatus 3 (as shown in FIGS. 3A and 3B) includes a hopper brace 31 and a feeding hopper 32 that is installed on the hopper brace 31. A dip adjustor 33 may be provided at the bottom of the feeding hopper 32 for adjust the inclining angle of the feeding hopper 32. To make the source material spread evenly and move with an even front on the surface of the continuous track 2, one or more equalizer bars 34 may be provided on the feeding hopper 32.

The thickness adjustor 4 is fixedly installed on the track frame 21. The thickness adjustor 4 (as shown in FIGS. 3A and 3B) includes at least one adjusting post 41 that is graduated and is installed on the track frame 21, a horizontal bar 42 that is connected to the adjusting post 41 and can move up and down, and a lock 43 that is provided on the adjusting post 41 for limiting the movement of adjusting bar 42.

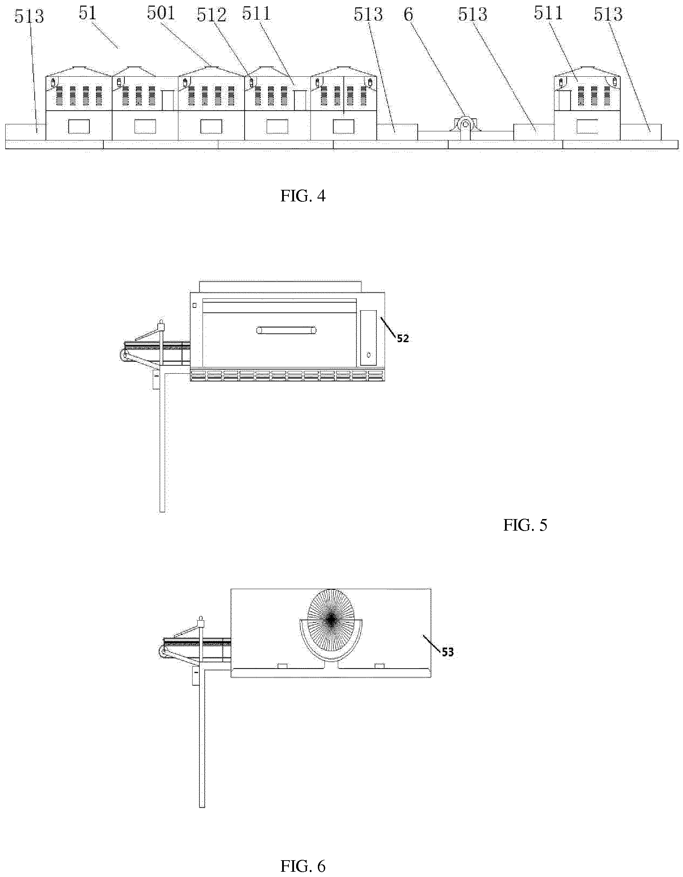

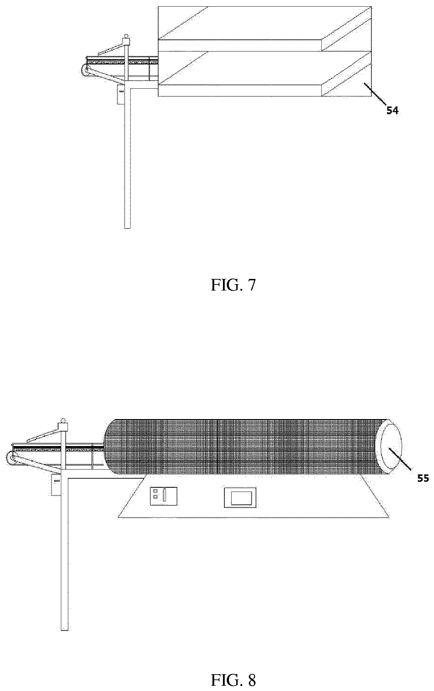

The drying apparatus 5 includes an intelligent microwave heating system 51 equipped with a vapor-extraction mechanism 501 (as shown in FIG. 4), or includes intelligent oven 52 (as shown in FIG. 5), or includes a fan heater 53 (as shown in FIG. 6), or includes a fin-type heater 54 (as shown in FIG. 7), or includes a tube-type heater 55 (as shown in FIG. 8).

Where the drying apparatus 5 is the intelligent microwave heating system 51, or the intelligent oven 52, or the tube-type heater 55, the continuous track 2 passes through drying apparatus 5. Where the drying apparatus 5 is the fin-type heater 54, the continuous track 2 is arranged below, above or through the drying apparatus 5. Where the drying apparatus 5 is the fan heater 53, the continuous track 2 is arranged along either or both sides of the drying apparatus 5.

In the present embodiment, the drying apparatus 5 is preferably the intelligent microwave heating system 51 (as shown in FIG. 4). The intelligent microwave heating system 51 includes a plurality of modularized microwave heating devices 511 that are configured to be combined freely to form the two stages, namely an upstream stage and a downstream stage. The microwave heating device 511 further has a sensor 512 for sensing the presence of material on the continuous track 2. The sensor 512 is in communicatory connection with the intelligent controller 8, for accurately controlling the on and off status of each of the microwave heating devices 511, so as to save energy while effectively protecting the continuous track 2 from prematurely receiving high heat, thereby prolonging the service life of the continuous track 2. Additionally, each of the stages formed by the microwave heating devices 511 has two ends thereof provided with microwave hoods 513. The lifting roller 6 is arranged between the two adjacent microwave hoods 513.

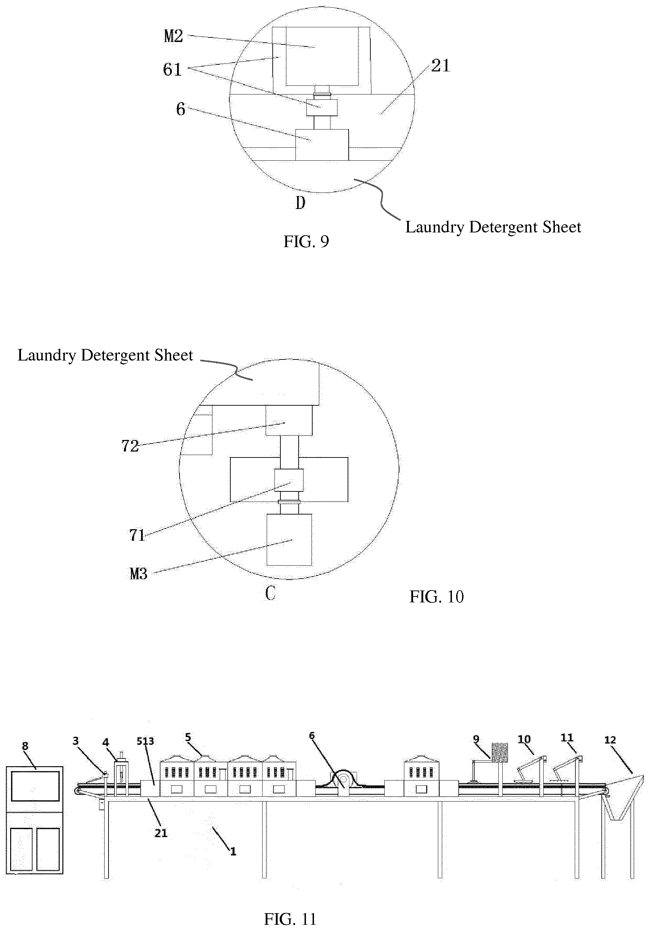

The lifting roller 6 (as shown in FIG. 9) is mounted on a roller brace 61. The roller brace 61 is installed on the track frame 21, or is placed on the ground and is freely separated from the track frame 21. A motor M2 for driving the lifting roller 6 to rotate is also installed on the roller brace 61. The start, rotation rate and stop of the motor M2 are all intelligently controlled by the intelligent controller 8, or are controlled manually.

The rolling-up apparatus 7 (as the enlarged view C shown in FIG. 10) includes a roller support 71, and a rolling-up roller 72 that is installed on the roller support 71. A motor M3 installed on the roller support 71 drives the rolling-up roller 72 to rotate and its operation is accurately controlled by the intelligent controller 8.

The intelligent controller 8 is freely separated from the track frame 21, or is installed on the track frame 21, or is installed on the drying apparatus 5. Alternatively, the intelligent controller 8 is a handheld intelligent terminal such as a handset, or the intelligent controller 8 is a PC such as a computer.

The operations and work flow of the intelligent manufacturing system for making cleaning sheet according to the first embodiment is described below.

The values of output power for the motors M1, M2 and M3 in the intelligent controller 8 are first set such that the three motors will rotate at the same speed, thereby preventing differential rotation that would cause the dried cleaning sheet to break and unable to form rolls. The temperature for the drying apparatus 5 is also set.

The material-feeding apparatus 3 is then moved to one end of the continuous track 2 and the feeding hopper 32 is positioned to contact the continuous track 2. The source material of the cleaning sheet is poured into the feeding hopper 32, and the continuous track 2 is started.

For the upstream stage of the intelligent microwave heating system 51, which includes a plurality of microwave heating devices 511, when the sensor 512 in the first microwave heating device 511 detects that the material for making the cleaning sheet on the continuous track 2 is about to enter the first microwave heating device 511, the intelligent controller 8 activates the first microwave heating device 511 to provide heat for drying. When the sensor 512 in the second microwave heating device 511 detects the material on the continuous track 2 is about to enter the second microwave heating device 511, the intelligent controller 8 activates the second microwave heating device 511 to provide heat for drying, and so on.

When the sensor 512 in the last microwave heating device 511 of the upstream stage of the intelligent microwave heating system 51 detects that the cleaning sheet on the continuous track 2 is about to exit the last microwave heating device 511, the intelligent controller 8 immediately starts the motor M2. The lifting roller 6, driven by the motor M2, lifts the dried cleaning sheet that exits the upstream stage of the intelligent microwave heating system 51, so that the surface of the cleaning sheet contacting the continuous track 2 can be dried rapidly by the ambient heat or by a fan. Afterwards, the cleaning sheet is carried by the continuous track 2 to enter the downstream stage of the intelligent microwave heating system 51 to be dried again.

For the downstream stage of the intelligent microwave heating system 51, which includes at least one microwave heating device 511, when the sensor 512 in the microwave heating device 511 detects that the cleaning sheet on the continuous track 2 is about to enter therein, the intelligent controller 8 immediately turns on the microwave heating device 511 in the downstream stage of the intelligent microwave heating system 51 to provide heat for drying.

When the sensor 512 in the microwave heating device 511 of the downstream stage of the intelligent microwave heating system 51 detects that the cleaning sheet on the continuous track 2 is about to exit therefrom, the intelligent controller 8 immediately starts the motor M3, so that the rolling-up roller 72, driven by the motor M3, rolls the dried cleaning sheet on the rolling-up roller 72. When the cleaning sheet on the rolling-up roller 72 reaches a predetermined amount, the intelligent controller 8 suspends the continuous track 2, the drying apparatus 5, the lifting roller 6, and the rolling-up roller 72. After a replacement vacant rolling-up roller 72 is loaded, the manufacturing operations are resumed.

The second embodiment of the present invention is illustrated below with reference to FIGS. 11-16.

The system includes a cleaning sheet production line 1 (referring to FIG. 11). The cleaning sheet production line 1 includes a continuous track 2, a track frame 21 that supports the continuous track 2, a material-feeding apparatus 3 that adds a source material of the cleaning sheet (which can be a liquid, such as highly concentration liquid detergent) onto the continuous track 2, a thickness adjustor 4 that adjusts the thickness of the material of the cleaning sheet on the continuous track 2, a two-stage drying apparatus 5 that vaporizes moisture from the material of the cleaning sheet on the continuous track 2, a lifting roller 6 that is arranged between the two stages of the drying apparatus 5, an enzyme-adding apparatus 9 that adds active ingredients to the dried cleaning sheet, an embossing apparatus 10 that embosses the cleaning sheet with patterns, a cutting apparatus 11 that cuts the dried cleaning sheet into predetermined shapes, a collecting apparatus 12 that collects the pieces of the cleaning sheet cut by the cutting apparatus 11, and an intelligent controller 8 that controls the overall operation.

Therein, the continuous track 2 is provided with non-stick coating 22 (as shown in FIG. 2). The non-stick coating 22 is preferably made of Teflon for preventing the material of the cleaning sheet from sticking on the continuous track 2. The non-stick coating 22 and the continuous track 2 are integrated as a unity. Alternatively, the non-stick coating 22 is applied to the exterior surface of the continuous track 2, or the non-stick coating 22 is applied to a medium 23 that is fixed to the exterior surface of the continuous track 2. The medium 23 is preferably a heat-resistant non-woven cloth. The continuous track 2 is driven by a motor M1 that is installed on the track frame 21. The start, rotation rate and stop of the motor M1 are all controlled by the intelligent controller 8.

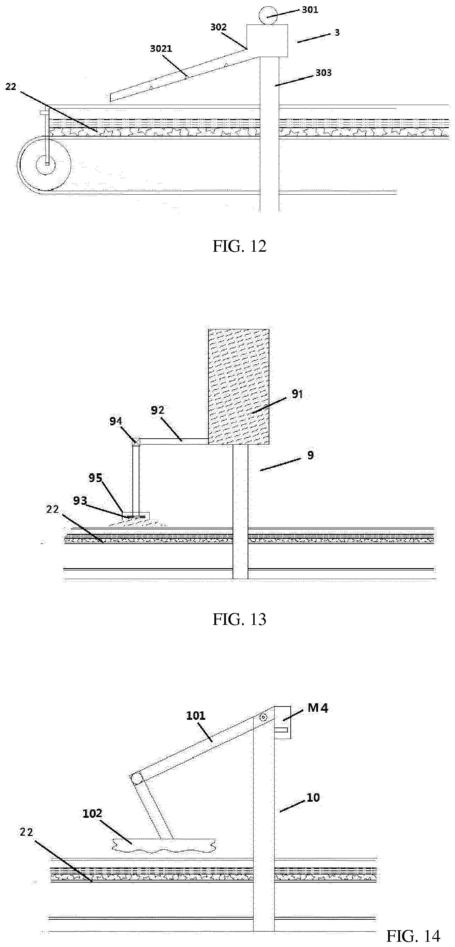

The material-feeding apparatus 3 is freely separated from the track frame 21, or is fixedly installed on the track frame 21. The material-feeding apparatus 3 (as shown in FIG. 12) is composed of a feed tube 301 equipped with a stop valve, and a feeding member 302 that is connected to the feed tube 301 and located above the continuous track 2. The feeding member 302 is suspended over the continuous track 2 by a hanger 303. The feeding member 302 has its outlet as wide as that of the continuous track 2, or narrower than the continuous track 2, so as to prevent the liquid source material for making the cleaning sheet being wasted by overflow. The feeding member 302 has therein more than one transverse equalizer bars 3021 for equalizing the cleaning sheet's liquid material. The transverse equalizer bars 3021 are arranged on one inner surface of the feeding member 302, or arranged symmetrically on both inner surfaces of the feeding member 302, or arranged in a staggered fashion on both inner surfaces of the feeding member 302, so as to make the liquid material of the cleaning sheet flow out the outlet at a uniform speed while filling up the outlet and thereby distribute over the continuous track 2 evenly.

The thickness adjustor 4 is fixedly installed on the track frame 21. The thickness adjustor 4 (as shown in FIGS. 3A and 3B) includes at least one adjusting post 41 that is graduated and is installed on the track frame 21, an adjusting bar 42 that is connected to the adjusting post 41 and can move up and down, and a lock 43 that is provided on the adjusting post 41 for limiting the movement of the adjusting bar 42.

The drying apparatus 5 includes an intelligent microwave heating system 51 equipped with a vapor-extraction mechanism 501 (as shown in FIG. 4), or includes intelligent oven 52 (as shown in FIG. 5), or includes a fan heater 53 (as shown in FIG. 6), or includes a fin-type heater 54 (as shown in FIG. 7), or includes a tube-type heater 55 (as shown in FIG. 8).

Where the drying apparatus 5 is the intelligent microwave heating system 51, or the intelligent oven 52, or the tube-type heater 55, the continuous track 2 passes through drying apparatus 5. Where the drying apparatus 5 is the fin-type heater 54, the continuous track 2 is arranged below, above or through the drying apparatus 5. Where the drying apparatus 5 is the fan heater 53, the continuous track 2 is arranged along either or both sides of the drying apparatus 5.

In the present embodiment, the drying apparatus 5 is also preferably the intelligent microwave heating system 51 (as shown in FIG. 4). The intelligent microwave heating system 51 includes a plurality of modularized microwave heating devices 511 that are configured to be combined freely to form the two stages, namely an upstream stage and a downstream stage. The microwave heating device 511 further has a sensor 512 for sensing the presence of the material for making the cleaning sheet on the continuous track 2. The sensor 512 is in communicatory connection with the intelligent controller 8, for accurately controlling the on and off status of each of the microwave heating devices 511, so as to save energy while protecting the continuous track 2 from prematurely receiving high heat, thereby prolonging the service life of the continuous track 2. Additionally, each of the stages formed by the microwave heating devices 511 has two ends thereof provided with microwave hoods 513. The lifting roller 6 is arranged between the two adjacent microwave hoods 513.

The lifting roller 6 (as shown in FIG. 9) is mounted on a roller brace 61. The roller brace 61 is installed on the track frame 21, or is placed on the ground and is freely separated from the track frame 21. A motor M2 for driving the lifting roller 6 to rotate is also installed on the roller brace 61. The start, rotation rate and stop of the motor M2 can all be controlled by the intelligent controller 8, or can be controlled manually.

The enzyme-adding apparatus 9 (as shown in FIG. 13) is installed on the track frame 21, or is suspended over the continuous track 2, or is arranged along one side of the track frame 21 and freely separated from it. The enzyme-adding apparatus 9 includes a pressure vessel 91 that stores at least one active enzyme, a sprayer 93 that is communicated with the pressure vessel 91 by a hose 92, and a solenoid valve 94 that is installed on the hose 92 or on the sprayer 93. Therein, the sprayer 93 is located above the continuous track 2, and the hose 92 may be adjustable in length for operations at different angles. The nozzle 93 may be additionally provided with a nozzle shield 95, for preventing the active enzyme from falling outside the continuous track 2, thereby improving utilization. The solenoid valve 94 is in communicatory connection with the intelligent controller 8 by a data cable or wirelessly, and is controlled by the intelligent controller 8.

The embossing apparatus 10 (as shown in FIG. 14) is installed on the track frame 21, or suspended over continuous track 2, or is arranged at one side of the track frame 21 and is freely separated from it. The embossing apparatus 10 includes a moving arm 101 that is flexibly extendable and rotatable, a replaceable mold 102 that is installed on one end of the moving arm 101, and a motor M4 that drives the moving arm 101. The motor M4 is in communicatory connection with the intelligent controller 8 by a data cable or wirelessly, and is controlled by the intelligent controller 8. The motor M4 has its controller preloaded with a control program, or receives a control program wirelessly from a remote input device, or receives a control program through a USB interface, so that the moving arm 101 can perform various motions under control and thereby emboss the dried cleaning sheet with various patterns.

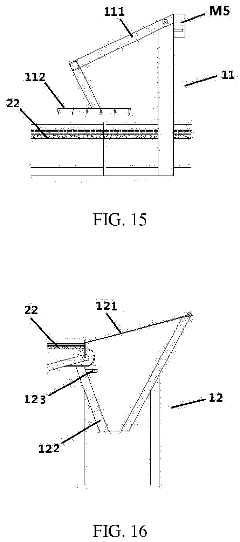

The cutting apparatus 11 (as shown in FIG. 15) is installed on the track frame 21, or is suspended over the continuous track 2, or is freely separated from the track frame 21, so as to cut the formed whole piece of cleaning sheet or sheet roll into smaller pieces of any desired shapes for convenient packaging. The cutting apparatus 11 includes a tool arm 111 that is extendable and rotatable, a cutting knife 112 that is replaceably installed at one end of the tool arm 111, and a motor M5 that drives the tool arm 111 to work. The motor M5 is in communicatory connection with the controller 8 by a data cable or wirelessly, and is controlled by the intelligent controller 8. Similarly, the motor M5 has its controller preloaded with a control program, or receives a control program wirelessly from a remote input device, or receives an control program through a USB interface, so that the tool arm 111 can perform various motions under control and thereby cut the tool arm 111 into pieces of various shapes.

The collecting apparatus 12 (as shown in FIG. 16) is freely separated from the track frame 21, or is fixedly installed on one end of the track frame 21. The collecting apparatus 12 includes a shovel 121 that picks up the cleaning sheet, a drop hopper 122 that put the cut pieces of the cleaning sheet into packaging bags, and a counter 123 that counts the number of the pieces being packed. Therein, the shovel 121 may be controlled manually. Alternatively, the shovel 121 is in communicatory connection with the controller 8 by means of a data cable or wirelessly, and is controlled by the intelligent controller 8.

The intelligent controller 8 is freely separated from the track frame 21, or is installed on the track frame 21, or is installed on the drying apparatus 5. Alternatively, the intelligent controller 8 is a handheld intelligent terminal such as a handset, or the intelligent controller 8 is a PC unit such as a computer.

The operations and work flow of the intelligent manufacturing system for making cleaning sheet according to the second embodiment is described below.

The values of output power for the motors M1 and M2 are first set in the intelligent controller 8 such that the two motors will rotate at the same speed, thereby preventing differential rotation that would cause the dried cleaning sheet to break. Also set is the temperature for the drying apparatus 5.

Then the material-feeding apparatus 3 is moved to one end of the continuous track 2 and the feeding hopper 32 is posed to contact the continuous track 2. The material of the cleaning sheet is poured into the feeding hopper 32, and the continuous track 2 is started.

For the upstream stage of the intelligent microwave heating system 51 that includes a plurality of microwave heating devices 511, when the sensor 512 in the first microwave heating device 511 detects that the material for making the cleaning sheet on the continuous track 2 is about to enter the first microwave heating device 511, the intelligent controller 8 activates the first microwave heating device 511 to provide heat for drying. When the sensor 512 in the second microwave heating device 511 detects the material on the continuous track 2 is about to enter the second microwave heating device 511, the intelligent controller 8 activates the second microwave heating device 511 to provide heat for drying, and so on.

When the sensor 512 in the last microwave heating device 511 of the upstream stage of the intelligent microwave heating system 51 detects that the cleaning sheet on the continuous track 2 is about to exit the last microwave heating device 511, the intelligent controller 8 starts the motor M2. The lifting roller 6, driven by the motor M2, lifts the dried cleaning sheet that passes through the upstream stage of the intelligent microwave heating system 51, so that the surface of the cleaning sheet contacting the continuous track 2 can be dried rapidly by the ambient heat or by a fan. Afterwards, the cleaning sheet is carried by the continuous track 2 to enter the downstream stage of the intelligent microwave heating system 51 to be dried again.

For the downstream stage of the intelligent microwave heating system 51 which includes at least one microwave heating device 511, when the sensor 512 in the microwave heating device 511 detects that the cleaning sheet on the continuous track 2 is about to enter therein, the intelligent controller 8 activates the microwave heating device 511 in the downstream stage of the intelligent microwave heating system 51 to provide heat for drying.

When the cleaning sheet on the continuous track 2 leaves the microwave heating device 511 in the downstream stage of the intelligent microwave heating system 51, the intelligent controller 8 immediately opens the solenoid valve 94 in the enzyme-adding apparatus 9, and makes the sprayer 93 spray the active ingredients stored in the pressure vessel 91, such as enzyme, evenly over the cleaning sheet.

The continuous track 2 carries the enzyme-applied cleaning sheet forward, and the intelligent controller 8 controls the motor M4 in the embossing apparatus 10 to drive the mold 102 to emboss the dried cleaning sheet with various patterns.

The continuous track 2 carries the embossed cleaning sheet forward, and the intelligent controller 8 controls the motor M5 in the cutting apparatus 11 to drive the cutting knife 112 to cut the cleaning sheet into smaller pieces of various shapes.

The continuous track 2 carries the cut pieces of the cleaning sheet forward, and at the same time the shovel 121 of the collecting apparatus 12 collect the cut pieces and put them into the drop hopper 122 for subsequent packaging into boxed or bags.

The second embodiment includes the following improvements. The cleaning sheet production line 1 (referring to FIG. 11) includes two modules, the first module including the continuous track 2, the track frame 21 that supports the continuous track 2, the material-feeding apparatus 3 that feeds the source material for making the cleaning sheet onto the continuous track 2, the thickness adjustor 4 that adjusts the thickness of the material on the continuous track 2, a two-stage drying apparatus 5 that vaporizes moisture from the cleaning sheet's material on the continuous track 2, the lifting roller 6 that is arranged between the two stages of the drying apparatus 5, the enzyme-adding apparatus 9 that adds active ingredients to dried cleaning sheet, and the intelligent controller 8 that controls overall operation.

The second module is composed of the embossing apparatus 10 that embosses the cleaning sheet with patterns, the cutting apparatus 11 that cut the dried cleaning sheet into pieces of various shapes, and the collecting apparatus 12 that receives the pieces of the cleaning sheet cut by the cutting apparatus 11.

The two modules can be freely separated by an arbitrary distance therebetween. The working principle and operation of the two modules are similar to those described for the second embodiment, and how they can be connected is apparent to people shilled in the art.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. An intelligent manufacturing system for making cleaning sheet, comprising
a drying apparatus (5); and
a continuous track (2) having a non-stick coating (22).

2. The intelligent manufacturing system of claim 1, wherein the drying apparatus (5) has at least two stages, and a lifting roller (6) arranged between the two stages of the drying apparatus (5).

3. The intelligent manufacturing system of claim 1 or 2, wherein the non-stick coating and the continuous track are integrated as a unity, or the non-stick coating (22) is applied to an exterior surface of the continuous track (2), or the non-stick coating (22) is applied to a medium (23) that is fixed to the exterior surface of the continuous track (2).

4. The intelligent manufacturing system of any one of claims 1 to 3, wherein the drying apparatus (5) includes an intelligent microwave heating system (51) equipped with a vapor-extraction mechanism (501), or includes an intelligent oven (52), or includes a fan heater (53), or includes a fin-type heater (54), or includes tube-type heater (55).

5. The intelligent manufacturing system of claim 4, wherein the drying apparatus (5) includes an intelligent microwave heating system (51) equipped with a vapor-extraction mechanism (501), and the intelligent microwave heating system (51) includes a plurality of modularized microwave heating devices (511) that are configured to be combined freely to form the two stages of the drying apparatus (5).

6. The intelligent manufacturing system of claim 5, wherein each said stage formed by the microwave heating devices (511) has two ends thereof provided with microwave hoods (513).

7. The intelligent manufacturing system of claim 5, wherein each said microwave heating device (511) includes a material sensor (512) that is in communicatory connection with an intelligent controller (8).

8. The intelligent manufacturing system of any one of claims 1 to 7, wherein the continuous track (2) passes through the drying apparatus (5), or travels below the drying apparatus (5), or travels above the drying apparatus (5), or travels along one side of the drying apparatus (5).

9. The intelligent manufacturing system of any one of claims 1 to 8, wherein the continuous track (2) has one end thereof provided with a material-feeding apparatus (3) for feeding a material for making the cleaning sheet onto the continuous track (2).

10. The intelligent manufacturing system of any one of claims 1 to 9, further comprising a thickness adjustor (4) that is provided above the continuous track (2) for adjusting a thickness of a material for making the cleaning sheet on the continuous track (2).

11. The intelligent manufacturing system of any one of claims 1 to 10, further comprising a rolling-up apparatus (7) that is provided at one end of the continuous track (2) or above the continuous track (2) for rolling the cleaning sheet that has been dried.

12. The intelligent manufacturing system of any one of claims 1 to 11, further comprising an enzyme-adding apparatus (9) that is provided at one end of the continuous track (2) or above the continuous track (2) for adding active ingredients to the cleaning sheet that has been dried.

13. The intelligent manufacturing system of any one of claims 1 to 12, further comprising an embossing apparatus (10) that is provided at one end of the continuous track (2) or above the continuous track (2) for embossing the cleaning sheet with patterns.

14. The intelligent manufacturing system of any one of claims 1 to 13, further comprising a cutting apparatus (11) that is provided at one end of the continuous track (2) or above the continuous track (2) for cutting the cleaning sheet that has been dried into pieces with predetermined shapes.

15. The intelligent manufacturing system of claim 14, further comprising a collecting apparatus (12) that is provided at one end or one side of the continuous track (2) for collecting the pieces of the cleaning sheet that have been cut by the cutting apparatus (11).
